Europäisches Patentamt

(19) European Patent Office

Office européen des brevets

(11) EP 0 798 464 A1

(12) DEMANDE DE BREVET EUROPEEN

(43) Date de publication:
01.10.1997 Bulletin 1997/40

(51) Int Cl.6: F04C 29/00, B01D 53/22

(21) Numéro de dépôt: 97400670.2

(22) Date de dépôt: 25.03.1997

(84) Etats contractants désignés:
DE ES IT NL

(30) Priorité: 27.03.1996 FR 9603808

(71) Demandeur: L'AIR LIQUIDE, SOCIETE ANONYME POUR
L'ETUDE ET L'EXPLOITATION DES PROCEDES
GEORGES CLAUDE
75321 Paris Cédex 07 (FR)

(72) Inventeur: Fillet, Frédéric
92140 Clamart (FR)

(74) Mandataire: Mercey, Fiona Susan et al
L'Air Liquide,
Service Brevets et Marques,
75, quai d'Orsay
75321 Paris Cédex 07 (FR)

(54) Procédé et installation de traitement d'air atmosphérique

(57) Le compresseur d'air (1) est refroidi au moyen d'une boucle d'eau (5) qui comprend une capacité-tampon (6) et un aéro-réfrigérant (7) muni d'une soufflante (8) à vitesse réglable. La capacité-tampon est alimentée par de l'eau d'appoint et comporte une purge (16) qui sert, lorsque la température ambiante est relativement élevée, à refroidir l'air comprimé préalablement séparé (en 2) de l'eau de refroidissement.

Application aux procédés de séparation d'air par adsorption ou par perméation.

FIG.1

## Description

La présente invention est relative à un procédé de traitement d'air atmosphérique, du type dans lequel :

- on comprime de l'air atmosphérique au moyen d'un compresseur refroidi par un liquide dont au moins une fraction du débit ressort du compresseur en mélange avec l'air comprimé;
- on sépare l'air du liquide de refroidissement, on refroidit le liquide issu de cette séparation, et on le recycle vers le compresseur; et
- on envoie l'air issu de la séparation à au moins une étape ultérieure du traitement.

L'invention s'applique en particulier aux procédés de séparation d'air par adsorption ou par perméation.

Dans ces applications, les compresseurs d'air sont le plus souvent des compresseurs du type à deux vis lubrifiées à l'huile. L'huile a une triple fonction : graissage des paliers des vis, étanchéité entre les deux vis et entre celles-ci et le carter du compresseur, et refroidissement de l'air en cours de compression.

La présence de l'huile au contact direct de l'air est avantageuse du point de vue énergétique, car elle maintient l'air dans des conditions proches des conditions isothermes. Cependant, la séparation de l'air et de l'huile en sortie de compresseur est relativement coûteuse à réaliser, et la séparation de l'huile et de l'eau condensée au cours de la compression est très difficile tout en étant nécessaire pour protéger l'environnement.

L'invention a pour but de permettre d'utiliser le liquide de refroidissement du compresseur pour non seulement éviter les problèmes ci-dessus, mais également permettre d'obtenir pour l'air issu de ladite séparation une température désirée pour son traitement ultérieur, notamment dans le cadre des petites unités de séparation d'air par adsorption à variation de pression (Pressure Swing Adsorption ou PSA) ou par perméation sélective.

A cet l'effet, l'invention a pour objet un procédé du type précité, caractérisé en ce que :

- on utilise comme liquide de l'eau;
- on fait passer l'eau issue de ladite séparation par une capacité-tampon;
- on alimente cette capacité-tampon avec de l'eau d'appoint pour y maintenir au moins un niveau prédéterminé; et
- on soutire de la capacité-tampon un débit de purge que l'on utilise, au moins pour certaines valeurs de la température ambiante, pour refroidir l'air issu de ladite séparation.

Le procédé suivant l'invention peut comporter une ou plusieurs des caractéristiques suivantes :

- on prélève au moins une partie de l'eau d'appoint d'une source d'eau extérieure;
- à certains instants au moins, on complète ledit débit de purge par un débit complémentaire provenant de la source d'eau extérieure;
- on fournit au moins une partie de l'eau d'appoint à partir d'une condensation réalisée au cours d'une étape ultérieure du traitement;
- on vaporise le débit de purge, éventuellement complété par un débit d'eau complémentaire, dans un courant de gaz résiduaire non saturé en eau provenant d'une étape ultérieure du traitement, et on met ce courant de gaz en relation d'échange thermique avec l'air issu de ladite séparation;
- on refroidit l'eau issue de ladite séparation au moyen d'un flux d'air réglable.

L'invention a également pour objet une installation de traitement d'air atmosphérique destinée à la mise en oeuvre d'un tel procédé. Cette installation, du type comprenant :

- un compresseur d'air atmosphérique refroidi par un liquide qui y circule au contact direct de l'air;
- des moyens de séparation de l'air et du liquide à la sortie du compresseur;
- une boucle de recyclage du liquide vers le compresseur, cette boucle comportant un dispositif de réfrigération; et
- une conduite intermédiaire véhiculant l'air qui sort des moyens de séparation vers au moins un appareil de traitement ultérieur,

est caractérisée en ce que :

- ledit liquide est de l'eau; et
- la boucle comporte une capacité-tampon munie d'une conduite d'alimentation en eau d'appoint et d'une conduite de purge reliée à un dispositif de refroidissement d'air prévu sur ladite conduite intermédiaire.

Des exemples de mise en oeuvre de l'invention vont maintenant être décrits en regard du dessin annexé, sur lequel :

- la Figure 1 représente schématiquement une installation de production d'azote par perméation sélective conforme à l'invention; et
- la Figure 2 est un schéma partiel d'une variante.

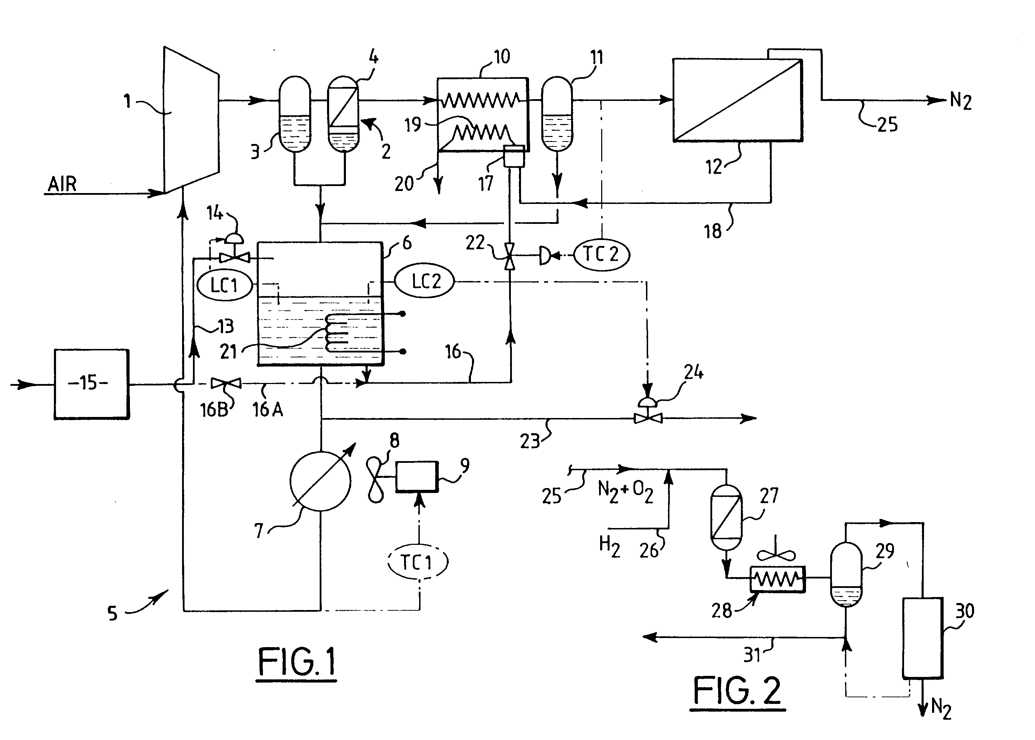

l'installation représentée sur la Figure 1 comprend essentiellement : un compresseur d'air 1, qui peut être du type à vis, du type ROOTS ou du type à anneau liquide; un appareil de séparation air-eau 2, comprenant un séparateur de phases 3 suivi d'un coalesceur 4; une boucle 5 de recyclage de d'eau recueillie en 3 et en 4, cette boucle comprenant en série une capacité-tampon 6 et un aéro-réfrigérant 7 dont la soufflante 8 est actionnée par un moteur 9 à vitesse réglable; un échangeur de chaleur indirect à contre-courant 10; un second séparateur de phases 11; et un perméateur 12 adapté pour laisser passer l'azote et retenir l'oxygène de l'air.

La capacité-tampon 6 est équipée d'une conduite d'alimentation 13 munie d'une vanne 14 et reliée à une source d'eau extérieure, par exemple au réseau, via un dispositif 15 d'épuration en sels minéraux et en bactéries. Ce dispositif 15 peut être du type à échange d'ions. La vanne 14 est commandée par un capteur de niveau LC1 de manière à s'ouvrir dès qu'un niveau bas prédéterminé est atteint dans la capacité 6.

La capacité-tampon 6 est également équipée d'une conduite de purge 16 qui part de son fond et mène à un injecteur 17 disposé au bout froid de l'échangeur 10. Une conduite 18 relie la sortie de perméat du perméateur 12 à l'injecteur 17, et le mélange résultant est envoyé dans les passages 19 de fluide frigorigène de l'échangeur avant d'être rejeté à l'atmosphère en 20.

La capacité-tampon 6 est encore munie d'une résistance électrique 21 de chauffage de l'eau que la capacité contient.

Un premier capteur de température TC1 règle la vitesse du moteur 9 en fonction de la température de l'eau qui sort de l'aéro-réfrigérant 7. De plus, la conduite de purge 16 est équipée d'une vanne 22, laquelle est commandée par un second capteur de température TC2 qui mesure en permanence la température de l'air pénétrant dans le perméateur 12.

Sur la conduite qui relie le fond de la capacité-tampon 6 à l'aéro-réfrigérant 7 est piquée une conduite 23 de trop-plein équipée d'une vanne 24. Cette dernière est commandée par un second capteur de niveau LC2, qui l'ouvre lorsqu'un niveau haut prédéterminé est atteint dans la capacité-tampon.

L'azote constituant le rétentat du perméateur 12 est évacué de l'installation via une conduite de production 25.

En fonctionnement, il est souhaitable que le perméateur traite de l'air à une température modérée, typiquement de l'ordre de 15 à 30°C. On prendra comme exemple une température de consigne TC de 25°C, et on supposera que l'air et l'eau sortent du compresseur à la même température.

La compression de l'air en 1 provoque un échauffement de l'eau dont la valeur $\Delta T$ est connue, par exemple 11°C. Pour que l'air sorte du compresseur à 25°C, il faut donc que l'eau y entre à T1 = 25°C - $\Delta T$ = 14°C.

Lorsque le moteur 9 tourne à vitesse maximale, l'eau ressort du réfrigérant 7 à une température voisine de TA + 2°C, où TA est la température ambiante.

Deux cas sont alors à distinguer.

(1)     TA ≤ TC - $\Delta T$ - 2°C

(soit TA ≤ 12°C dans l'exemple considéré).

Dans ce cas, le réfrigérant 7 peut évacuer la totalité de la chaleur de compression. En effet, il peut fournir au compresseur de l'eau à TA + 2°C, ce qui correspond à une température de l'air comprimé TA + 2°C + $\Delta T$, valeur qui par hypothèse est inférieure ou égale à TC. On peut donc régler la vitesse du moteur 9 pour obtenir de l'air comprimé à TC = 25°C.

Dans cette situation, le capteur TC2 maintient fermée la vanne 22, et l'eau circule dans la boucle 5, de l'appareil 2 à la capacité-tampon 6, de celle-ci au réfrigérant 7, et, de là, au compresseur 1. Du fait de la condensation de l'humidité atmosphérique et de la récupération dans la capacité-tampon de l'eau condensée en 2 et en 11, le niveau a tendance à monter dans la capacité. Par suite, le capteur LC1 maintient fermée la vanne 14, et la vanne 24 s'ouvre de temps en temps, sous la commande du capteur LC2, lorsque le niveau haut prédéterminé est atteint dans la capacité 6. Ceci assure une purge périodique de cette dernière.

Lorsque la température ambiante est très basse, par exemple inférieure à 5°C, et que le compresseur fonctionne à vide, la résistance 21 est mise sous tension pour stabiliser la température de l'eau à + 5°C, afin d'éviter tout risque de formation de glace.

(2)     TA > TC - $\Delta T$ - 2°C

(soit TA > 12°C dans l'exemple considéré).

Dans ce cas, le réfrigérant 7 ne peut plus abaisser suffisamment la température de l'eau recyclée pour permettre d'obtenir directement la température TC à la sortie du compresseur.

L'air qui sort de l'échangeur 10 dépasse donc la température TC, ce qui, sous l'action du capteur TC2, provoque l'ouverture de la vanne 22. De l'eau de purge de la capacité 6, véhiculée par la conduite 16, est ainsi vaporisée en 17 dans l'air enrichi en oxygène, constituant le perméat du perméateur 12, qui est véhiculé par la conduite 18. Cette vaporisation abaisse la température du gaz résiduaire, lequel devient un fluide réfrigérant circulant dans l'échangeur 10 à contre-courant de l'air comprimé. On peut de cette manière ramener à la valeur de consigne TC la température de l'air qui entre dans le perméateur.

Dans ce mode de fonctionnement, suivant l'humidité atmosphérique, le niveau peut monter ou baisser dans la capacité 6. Il est maintenu entre les valeurs haute et basse prédéterminées sous l'action des capteurs LC1 et LC2.

Les calculs montrent que l'échangeur 10 peut faire baisser la température de l'air d'environ 13°C. Par conséquent, l'air comprimé sortant du compresseur peut avoir une température allant jusqu'à TC + 13°C = 38°C. Compte-tenu des performances du réfrigérant 7 indiqué plus haut, la température TC peut par suite être obtenue jusqu'à une température ambiante de 38°C - $\Delta T$ - 2°C = 38 - 11 - 2 = 25°C.

On voit que le fonctionnement optimal du perméateur peut être conservé pour toute température ambiante inférieure ou égale à 25°C, sans intervention d'autres échangeurs thermiques ni d'un groupe frigorifique.

Il est à noter que grâce à la présence de la conduite 13 d'eau d'appoint, le débit d'eau injecté en 17 ou évacué par la conduite de trop-plein 23 est indépendant de l'humidité de l'air atmosphérique, et peut en particulier être suffisant pour maintenir une qualité désiré de l'eau qui alimente le compresseur, du point de vue de sa teneur en sels minéraux comme de celui de sa composition bactériologique.

En variante, l'échangeur 10 peut être remplacé par un aéro-réfrigérant sur lequel l'eau de purge est pulvérisée.

Par ailleurs, comme indiqué en traits mixtes sur la Figure 1, une conduite 16A munie d'une vanne 16B peut éventuellement relier directement le dispositif de purification d'eau 15 à la conduite 16, pour fournir un complément d'eau froide au débit de purge.

Dans la variante de la Figure 2, la conduite 25 de production d'azote mène à un équipement d'épuration, et plus particulièrement d'élimination de l'oxygène résiduel, lequel est présent dans une proportion typiquement de l'ordre de quelques %. Cet équipement comprend une conduite 26 d'injection d'hydrogène, un pot catalytique 27 dans lequel se produit la réaction $H_2 + 1/2\ O_2 . H_2O$, un aéro-réfrigérant 28, un pot séparateur 29 et un sécheur 30. L'eau collectée en 29 et éventuellement en 30 est renvoyée vers la conduite 13 d'eau d'appoint via une conduite 31. Si le débit d'eau correspondant est suffisant, la liaison de la conduite 13 à une source exterieure telle que le réseau peut être supprimée.

**Revendications**

1. Procédé de traitement d'air atmosphérique, du type dans lequel :

- on comprime de l'air atmosphérique au moyen d'un compresseur (1) refroidi par un liquide dont au moins une fraction du débit ressort du compresseur en mélange avec l'air comprimé;
- on sépare (en 2) l'air du liquide de refroidissement, on refroidit (en 7) le liquide issu de cette séparation, et on le recycle vers le compresseur; et
- on envoie l'air issu de la séparation à au moins une étape ultérieure (12) du traitement,

**caractérisé en ce que :**

- on utilise comme liquide de l'eau;
- on fait passer l'eau issue de ladite séparation par une capacité-tampon (6);
- on alimente cette capacité-tampon avec de l'eau d'appoint pour y maintenir au moins un niveau prédéterminé; et
- on soutire de la capacité-tampon un débit de purge que l'on utilise (en 10), au moins pour certaines valeurs de la température ambiante, pour refroidir l'air issu de ladite séparation.

2. Procédé suivant la revendication 1, **caractérisé en ce qu'**on prélève au moins une partie de l'eau d'appoint d'une source d'eau extérieure.

3. Procédé suivant la revendication 1, **caractérisé en ce que,** à certains instants au moins, on complète ledit débit de purge par un débit complémentaire provenant de la source d'eau extérieure.

4. Procédé suivant l'une quelconque des revendications 1 à 3, **caractérisé en ce qu'**on fournit au moins une partie de l'eau d'appoint à partir d'une condensation réalisé (en 29, 30) au cours d'une étape ultérieure du traitement.

5. Procédé suivant l'une quelconque des revendications 1 à 4, **caractérisé en ce qu'**on vaporise (en 17) le débit de purge, éventuellement complété par un débit d'eau complémentaire, dans un courant de gaz résiduaire non saturé en eau provenant d'une étape ultérieure (12) du traitement, et on met ce courant de gaz en relation d'échange thermique (en 10) avec l'air issu de ladite séparation.

6. Procédé suivant l'une quelconque des revendications 1 à 5, **caractérisé en ce qu'**on refroidit (en 7) l'eau issue de ladite séparation au moyen d'un flux d'air réglable.

7. Installation de traitement d'air atmosphérique, du type comprenant :

- un compresseur d'air atmosphérique (1) refroidi par un liquide qui y circule au contact direct de l'air;
- des moyens (2) de séparation de l'air et du liquide à la sortie du compresseur;
- une boucle (5) de recyclage du liquide vers le compresseur, cette boucle comportant un dispositif de réfrigération (7); et
- une conduite intermédiaire véhiculant l'air qui sort des moyens de séparation (2) vers au moins un appareil de traitement ultérieur (12),

**caractérisée en ce que :**

- ledit liquide est de l'eau; et
- la boucle (5) comporte une capacité-tampon (6) munie d'une conduite (13) d'alimentation en eau d'appoint et d'une conduite de purge (16) reliée à un dispositif de refroidissement d'air (10) prévu sur ladite conduite intermédiaire.

**8.** Installation suivant la revendication 7, **caractérisée en ce que** la conduite (13) d'alimentation en eau d'appoint est reliée à une source d'eau extérieure.

**9.** Installation suivant la revendication 7, **caractérisée en ce que** la source d'eau extérieure peut être sélectivement reliée (en 16A) à la conduite de purge (16).

**10.** Installation suivant l'une quelconque des revendications 7 à 9, **caractérisée en ce qu'**un appareil de traitement ultérieur (26 à 30) comporte des moyens de condensation (29, 30), et en ce qu'il est prévu une conduite (31) de renvoi de l'eau ainsi condensée dans la conduite (13) d'alimentation en eau d'appoint.

**11.** Installation suivant l'une quelconque des revendications 7 à 10, **caractérisée en ce que** ledit dispositif de refroidissement d'air (10) comprend des moyens (17) de mélange de l'eau véhiculée par la conduite de purge (16) avec un gaz résiduaire non saturé en eau provenant d'un appareil de traitement ultérieur (12), et un échangeur de chaleur (10) pour mettre ce gaz résiduaire en relation d'échange thermique avec l'air issu desdits moyens de séparation (2).

**12.** Installation suivant l'une quelconque des revendications 7 à 11, **caractérisée en ce que** ledit dispositif de réfrigération (7) comprend un aéro-réfrigérant muni d'une soufflante (8) à vitesse réglable.

**13.** Installation suivant l'une quelconque des revendications 7 à 12, **caractérisée en ce que** le compresseur (1) est du type à vis, du type ROOTS ou du type à anneau liquide.

FIG.1

FIG.2

EP 0 798 464 A1

**Office européen des brevets**

**RAPPORT DE RECHERCHE EUROPEENNE**

Numero de la demande

EP 97 40 0670

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 330 555 A (B.ZIMMERN)<br>* revendications 1,5; figure 1 *<br>--- | 1,7 | F04C29/00<br>B01D53/22 |
| A | US 3 820 350 A (T.BRANDIN ET AL.)<br>* revendication 1; figure 1 *<br>----- | 7 | |

**DOMAINES TECHNIQUES RECHERCHES (Int.Cl.6)**

F04C
B01D

Le présent rapport a été établi pour toutes les revendications

| Lieu de la recherche | Date d'achèvement de la recherche | Examinateur |
|---|---|---|
| BERLIN | 14 Mai 1997 | Bertram, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)